# EUROPEAN PATENT APPLICATION

(11) **EP 2 234 329 A1**
(43) Date of publication of application: **29.09.2010**
(21) Application number: 07855756.8
(22) Date of filing: 24.12.2007
(51) Int. Cl.: H04L 12/24, H04B 1/74

(54) **THE METHOD AND DEVICE FOR PROTECTING THE SHARED CHANNEL IN THE OPTICAL TRANSMISSION SYSTEM**

(71) Applicant: ZTE Corporation, Shenzhen, Guangdong 518057 (CN)
(72) Inventor: HUANG, Jianhui, Shenzhen Guangdong 518057 (CN)
(74) Representative: Gray, John James
(86) International application number: PCT/CN2007/003748
(87) International publication number: WO 2009/079853

(57) **Abstract**

The present invention provides a method and a device for channel shared protection in an optical transmission system, where the channel provides a plurality of time-slots capable of bearing services, and the method comprises: firstly configuring a protection time-slot; and when a failure occurs in a channel during transmission of a service and results in interruption of the service, a site switching this service to a configured corresponding protection time-slot to be borne, and continuing to transmit this service to a destination site. The present invention well implements the protection of time-slots and saves the cost of equipment. In addition, the application mode can be flexibly configured: it may be configured as 1: *n* time-slot channel shared protection, or may be configured as *m: n* time-slot channel shared protection, thus the application is flexible and the applicability is better.

## Description

### The Method and Device for Protecting the Shared Channel in the Optical Transmission System

### Technical Field

The present invention relates to the optical-fiber communication field, and particularly, to a method and device for channel shared protection in an optical transmission system.

### Background of the Invention

The requirement for reliability of an optical transmission network is high. In order to assure the reliability of an optical transmission system, a plurality of protection techniques are proposed in the industry, such as the 1+1 optical channel protection technique, the 1+1 optical multiplexing section protection technique, the two-fiber bidirectional ring optical channel shared protection technique and so on.

In order to improve the utilization efficiency of wavelength and reduce the cost of the optical transmission system, the application of service convergecast (time division multiplexing) is more and more extensive. The service convergecast refers to combining a plurality of low speed services into a high speed signal by, for example, time division multiplexing and so on, to be transmitted in a fiber. At present, as the application of the optical transmission system in metro networks becomes more and more extensive, the convergecast of low speed signals gradually becomes the basic requirement of the optical transmission system. The protection of each converged service also becomes more and more important. If a line side interface in an optical transmission system is interrupted, using the conventional protection techniques, such as the aforementioned 1+1 optical channel protection technique and so on, is still advantageous; however, if only one of the converged services is interrupted, still using the aforementioned protection techniques may lead to the following problems:
If a service failure causes protection switching, other normal services will be switched as well, which affects the transmission of the other normal services;

Different services in a wavelength may be transmitted to different destinations, and in order not to affect the other services, the configuration of the protection system is complex and the cost is very high.

In order to satisfy the requirement for protecting time-slot services in an optical transmission system, and meanwhile save the cost of the system, a technical scheme for channel shared protection in the optical transmission system is needed at present.

### Summary of the Invention

The technical problem to be solved by the present invention is to provide a method and device for channel shared protection in an optical transmission system, which solves the problems existing in time-slot protection, and reduces the cost of time-slot protection.

In order to solve the above problem, the present invention provides a method for channel shared protection in an optical transmission system, the channel providing a plurality of time-slots capable of bearing services, the method comprising:
firstly configuring a protection time-slot; and
when a failure occurs in a channel during transmission of a service and results in interruption of the service, a site switching this service to a pre-configured corresponding protection time-slot to be borne, and continuing to transmit this service to a destination site.

Furthermore, in the above method, the site is a site nearest to the failed channel and/or a site which detects the failure.

Furthermore, in the above method, the protection time-slot is configured with respect to a service, and/or is configured with respect to a service time-slot.

Furthermore, the above method may further comprise: if a plurality of services or services borne on a plurality of service time-slots are interrupted at the same time and there is only one configured protection time-slot, by setting priorities of the services, ensuring that an interrupted service with a higher priority is transmitted first.

Furthermore, the above method may further comprise: when there is a plurality of protection time-slots configured for a service or service time-slot, setting priorities of the protection time-slots, and when the service or a service borne on the service time-slot is interrupted, switching the service to a protection time-slot with a higher priority preferentially.

Furthermore, the above method may further comprise: when a ring network architecture includes an inner ring and an outer ring, each of which provides a plurality of slots capable of bearing services,
firstly, configuring at least one time-slot in the inner ring as a protection time-slot of a service or service time-slot in the outer ring, and/or configuring at least one time-slot in the outer ring as a protection time-slot of a service or service time-slot in the inner ring; and
when a failure occurs in a channel during transmission of a service in the inner ring or outer ring and results in the interruption of the service, a site switching this service to a corresponding protection time-slot to be borne, and continuing to transmit this service to a destination site.

The present invention further provides a device for channel shared protection in an optical transmission system, including a detection unit, a control unit and a cross-connect unit, wherein,
the detection unit is configured to detect whether services transmitted between sites are normal, and if a failure occurs in a channel during transmission of a service, send service interruption information to the control unit;
the control unit is used to configure a protection time-slot, receive and read the service interruption information, find the protection time-slot corresponding to the interrupted service or a service time-slot bearing this service, and send switching channel information carrying the protection time-slot to which this service should be switched to the cross-connect unit; and
the cross-connect unit is configured to receive the switching channel information, switch the interrupted service to the protection time-slot indicated in the switching channel information to be borne, to continue to transmit this service to a destination site.

Furthermore, in the above device, said service interruption information sent by said detection unit includes information of a time-slot which bears the interrupted service or service identification information.

Furthermore, in the above device, said service interruption information further includes source site information and destination site information.

Furthermore, in the above device, said control unit configures the protection time-slot with respect to a service, and/or configures the protection time-slot with respect to a service time-slot.

Furthermore, in the above device, when said control unit configures one same protection time-slot for a plurality of services or a plurality of service time-slots, said control unit sets priorities for the plurality of services or the plurality of service time-slots, and if at least two services in the plurality of services or services borne on the plurality of service time-slots are interrupted at the same time, according to the set priorities of the services or service time-slots, switches an interrupted service with a higher priority to said protection time-slot to be borne.

Furthermore, in the above device, when said control unit configures a plurality of protection time-slots for a service or service time-slot, said control unit is further configured to set priorities of the protection time-slots, and when the service or a service borne on the service time-slot is interrupted, switch the service to a protection time-slot with a higher priority to be borne preferentially.

Compared with the prior art, the present invention well implements the protection of time-slots and saves the cost of equipment. In addition, the application mode can be flexibly configured: it may be configured as 1: *n* time-slot channel shared protection, or may be configured as *m: n* time-slot channel shared protection, thus the application is flexible and the applicability is better.

### Brief Description of the Drawings

FIG. 1 is a schematic diagram of the principle of a method for channel shared protection in an optical transmission system according to an embodiment of the present invention.
FIG. 2 is a schematic diagram of the structure of a device for channel shared protection in an optical transmission system according to an embodiment of the present invention.
FIG. 3 to FIG. 5 are schematic diagrams of the operation of a method for channel shared protection in a specific example of the present invention.

### Preferred Embodiments of the Present Invention

The main conception of the present invention is: configuring a protection time-slot at first; and when a failure occurs in a channel during transmission of a service, a site switching this service to the configured protection time-slot, and continuing to transmit this service to a destination site.

The present invention will be further described below in conjunction with the drawings and embodiments.

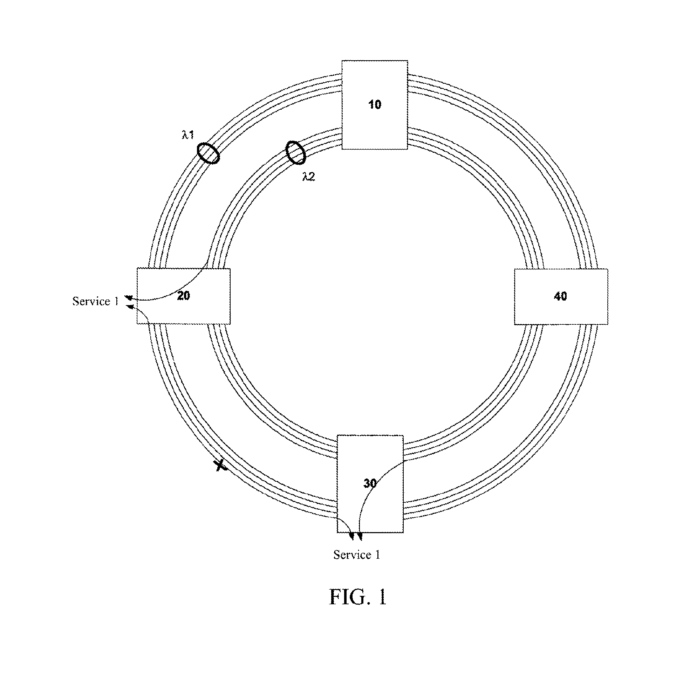

FIG. 1 shows a ring network architecture, but other types, such as point to point link network, grid mesh network, are also applicable.

In a wavelength division multiplexing system, a network is composed of a site 10, a site 20, a site 30 and a site 40; there is a wavelength λ1 in the fiber of the outer ring, and the wavelength λ1 can bear four time-slots of services; it is assumed that there is a wavelength λ2 in the fiber of the inner ring, and the wavelength λ2 can also bear four time-slots of services.

All of the four services borne on the wavelength λ1 of the outer ring can be protected by a time-slot provided by the wavelength λ2 of the inner ring. Moreover, if there is a plurality of wavelengths in the outer ring, and each wavelength bears a number of services, in order to improve the protection efficiency of the entire wavelength division multiplexing system and also to save the cost of the system, all of the wavelengths can be protected by one of the time-slots of the wavelength λ2 in the inner ring. Wherein, the protection time-slot and the corresponding service time-slot that can be switched to the protection time-slot may exist in different fibers both belonging to the outer ring or inner ring or the same fiber.

In the four services borne on the wavelength λ1 of the outer ring, a service 1 is transmitted from the site 20 to the site 30. If the service 1 is interrupted, it can be switched to wavelength λ2 of the inner ring at site 20 and occupies one time-slot therein, and then it is transmitted to the site 30 through the site 10 and site 40; a transmission path identical to that of the outer ring may be used, in which case it is transmitted from the site 20 to the site 30 through the time-slot of the λ2 of the inner ring.

If two services in the protected services are interrupted at the same time, priorities of the services may be set by the system, and at this point the service with a higher priority will be protected.

When the system is configured as the lowest cost, only one protection time-slot is provided, and if there are *n* working time-slots, a 1: *n* time-slot protection system is constructed. If the system needs to balance between low cost and protection capability, *m* protection time-slots can be configured, and in that case, an *m: n* time-slot protection system is constructed.

A method for channel shared protection in an optical transmission system, in which a plurality of time-slots capable of bearing services is provided in the channel, comprises the following steps:
firstly configuring a protection time-slot; and
   when a failure occurs in a channel during transmission of a service and results in the interruption of the service, a site switching this service to a configured corresponding protection time-slot to be borne, and continuing to transmit this service to a destination site.

The site can be a site nearest to the failed channel and/or the site that detects the failure, but not limited to these.

Wherein, the protection time-slot can be configured with respect to a service, e.g., a private protection time-slot is configured for a service, or one protection time-slot is configured for a plurality of services, or a plurality of protection time-slots are configured for a plurality of services; alternatively, the protection time-slot can be configured with respect to a service time-slot, e.g., for one or more service time-slots, corresponding one or more protection time-slots are configured.

If a plurality of services or the services borne on a plurality of service time-slots are interrupted at the same time and there is only one configured protection time-slot, then by setting priorities of the services, it is ensured that the interrupted service with a higher priority is transmitted first.

When there is a plurality of protection time-slots configured for a service or service time-slot, priorities of the protection time-slots are set. When the service or a service borne on the service time-slot is interrupted, the service is switched to a protection time-slot with a higher priority preferentially.

When there is a plurality of protection time-slots configured for a service, priorities of the protection time-slots are set, namely, the service is switched to a protection time-slot with a higher priority preferentially.

Specifically, in a ring network architecture including an inner ring and an outer ring each of which provides a plurality of time-slots capable of bearing services,

Firstly, at least one time-slot of the inner ring is configured as the protection time-slot of the service or service time-slot of the outer ring, and/or at least one time-slot of the outer ring is configured as the protection time-slot of the service or service time-slot of the inner ring;

When a failure occurs in a channel during transmission of a service in the inner ring or outer ring and results in the interruption of the service, a site switches this service to the corresponding protection time-slot to be borne, and continues to transmit this service to a destination site.

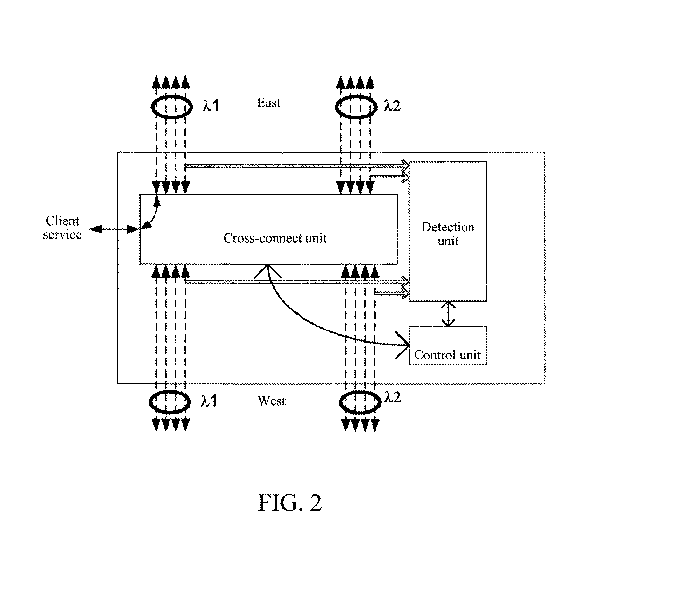

As shown in FIG. 2, a device for channel shared protection in an optical transmission system includes a detection unit, a control unit and a cross-connect unit, wherein:
The detection unit is used to detect whether services transmitted between sites are normal, and if a failure occurs in a channel during transmission of a service, send service interruption information to the control unit;

The service interruption information sent by the detection unit includes service identification information or information of a time-slot which bears the interrupted service, and may also include source site information, destination site information and so on.

The control unit is used to configure a protection time-slot, receive and read the service interruption information, find a protection time-slot corresponding to the service or the service time-slot bearing the service, and send switching channel information to the cross-connect unit, the switching channel information carrying information of the protection time-slot to which the service or the service time-slot bearing the service should be switched.

When the control unit configures the protection time-slot, it may configure the protection time-slot with respect to a service, e.g., configures a private protection time-slot for a service, or configures one protection time-slot for a plurality of services, and/or configures a plurality of protection time-slots for a plurality of services; alternatively, the control unit may configure the protection time-slot with respect to a service time-slot, e.g., for one or more service time-slots, configures one or more corresponding protection time-slots.

The control unit is further used to set priorities of a plurality of services; if a plurality of services or services borne on a plurality of service time-slots are interrupted at the same time and there is only one configured protection time-slot, then according to the set priorities of the services, the control unit ensures that the interrupted service with a higher priority is transmitted first.

When the control unit configures one same protection time-slot for a plurality of services or service time-slots, it sets priorities for the plurality of services or service time-slots, e.g., if at least two services in the plurality of services or services borne on the plurality of service time-slots are interrupted, according to the set priorities of the services or service time-slots, the interrupted service with a higher priority is switched to the protection time-slot to be borne.

When there is a plurality of protection time-slots configured by the control unit for a service or service time-slot, the control unit is further used to set priorities of the protection time-slots, namely, to switch the service to a protection time-slot with a higher priority preferentially.

When there is a plurality of protection time-slots configured by the control unit for a service or service time-slot, the control unit is further used to set priorities of the protection time-slots, and when the services or the service borne on the service time-slot is interrupted, preferentially switches the service to a protection time-slot with a higher priority to be borne.

The cross-connect unit is used to receive the switching channel information and switch an interrupted service to a protection time-slot indicated in the information to be borne, to continue to transmit this service to a destination site.

The present invention will be further described below in conjunction with a specific example.

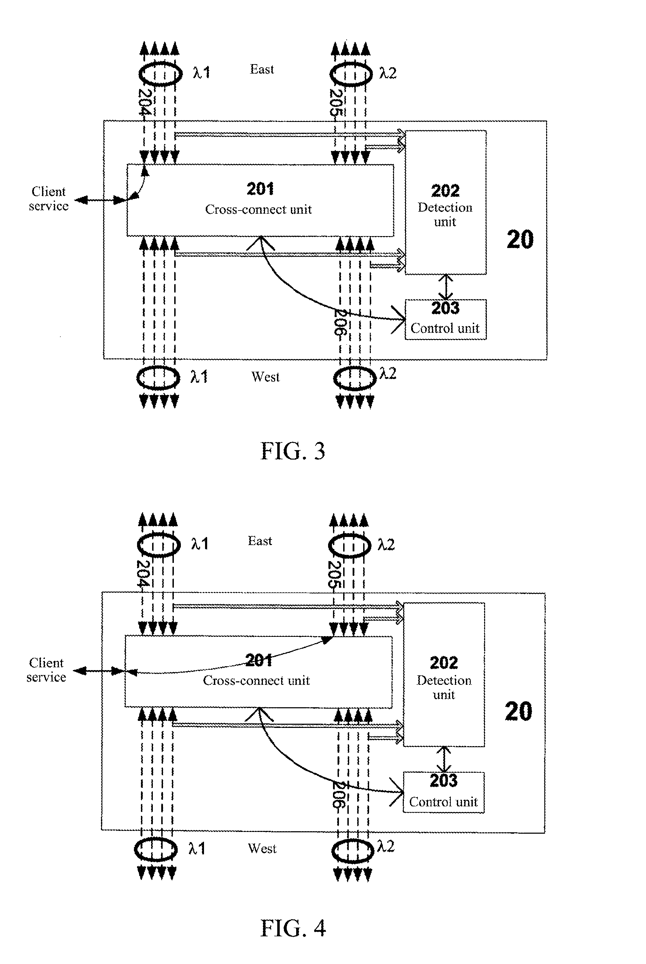

FIG. 3 to FIG. 5 show one example of the present invention. The site 20 is taken as an example for illustrating the implementation of the protection. As shown in FIG. 3, the site 20 is composed of a cross-connect unit 201, a detection unit 202 and a control unit 203, the site 20 may access wavelengths λ1 and λ2 in the east, and wavelengths λ1 and λ2 in the west, wherein there is a sub-wavelength (time-slot) 204 in the wavelength λ1 in the east, a sub-wavelength (time-slot) 205 in the wavelength λ2 in the east, and a sub-wavelength (time-slot) 206 in the wavelength λ2 in the west.

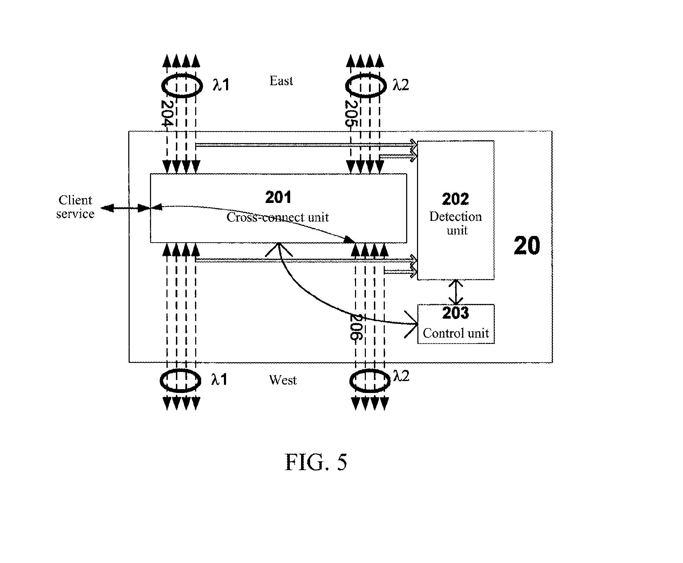

In normal working state, client services are transmitted through the east. When the sub-wavelength (time-slot) 204 of the wavelength λ1 is interrupted and cannot transmit a service normally, as shown in FIG. 4, the detection unit 202 discovers the service failure and informs the control unit 203, and the control unit 203 controls the cross-connect unit 201 to switch the client service to a pre-set protection sub-wavelength (time-slot) 205. The protection sub-wavelength (time-slot) may be set in the west, and as shown in FIG. 5, the cross-connect unit switches the client service to the protection sub-wavelength (time-slot) 206.

The description above is just preferred embodiments of the present invention, but not to limit the protection scope of the present invention, and the modifications and variations that can be easily thought of by those skilled in the art from the technical scope disclosed by the present invention, shall all fall within the protection scope of the present invention. Thus the protection scope of the present invention is defined by the claims.

### Industrial Applicability

The present invention well implements the protection of time-slots and saves the cost of equipment. In addition, the application mode can be flexibly configured: it may be configured as 1: *n* time-slot channel shared protection, or may be configured as *m: n* time-slot channel shared protection, thus the application is flexible and the applicability is better.

## Claims

1. A method for channel shared protection in an optical transmission system, the channel providing a plurality of time-slots capable of bearing services, the method comprising:
firstly configuring a protection time-slot; and
when a failure occurs in a channel during transmission of a service and results in interruption of the service, a site switching this service to a pre-configured corresponding protection time-slot to be borne, and continuing to transmit this service to a destination site.

2. The method as claimed in claim 1, wherein,
the site is a site nearest to the failed channel and/or a site which detects the failure.

3. The method as claimed in claim 1, wherein,
the protection time-slot is configured with respect to a service, and/or is configured with respect to a service time-slot.

4. The method as claimed in claim 3, further comprising:
if a plurality of services or services borne on a plurality of service time-slots are interrupted at the same time and there is only one configured protection time-slot, by setting priorities of the services, ensuring that an interrupted service with a higher priority is transmitted first.

5. The method as claimed in claim 3, further comprising:
when there is a plurality of protection time-slots configured for a service or service time-slot, setting priorities of the protection time-slots, and when the service or a service borne on the service time-slot is interrupted, switching the service to a protection time-slot with a higher priority preferentially.

6. The method as claimed in claim 1, further comprising:
when a ring network architecture includes an inner ring and an outer ring, each of which provides a plurality of time-slots capable of bearing services,
firstly, configuring at least one time-slot in the inner ring as a protection time-slot of a service or service time-slot in the outer ring, and/or configuring at least one time-slot in the outer ring as a protection time-slot of a service or service time-slot in the inner ring; and
when a failure occurs in a channel during transmission of a service in the inner ring or outer ring and results in the interruption of the service, a site switching this service to a corresponding protection time-slot to be borne, and continuing to transmit this service to a destination site.

7. A device for channel shared protection in an optical transmission system, including a detection unit, a control unit and a cross-connect unit, wherein,
the detection unit is configured to detect whether services transmitted between sites are normal, and if a failure occurs in a channel during transmission of a service, send service interruption information to the control unit;
the control unit is used to configure a protection time-slot, receive and read the service interruption information, find the protection time-slot corresponding to the interrupted service or a service time-slot bearing this service, and send switching channel information carrying the protection time-slot to which this service should be switched to the cross-connect unit; and
the cross-connect unit is configured to receive the switching channel information, switch the interrupted service to the protection time-slot indicated in the switching channel information to be borne, to continue to transmit this service to a destination site.

8. The device as claimed in claim 7, wherein:
said service interruption information sent by said detection unit includes information of a time-slot which bears the interrupted service or service identification information.

9. The device as claimed in claim 8, wherein:
said service interruption information further includes source site information and destination site information.

10. The device as claimed in claim 7, wherein:
said control unit configures the protection time-slot with respect to a service, and/or configures the protection time-slot with respect to a service time-slot.

11. The device as claimed in claim 10, wherein:
when said control unit configures one same protection time-slot for a plurality of services or a plurality of service time-slots, said control unit sets priorities for the plurality of services or the plurality of service time-slots, and if at least two services in the plurality of services or services borne on the plurality of service time-slots are interrupted at the same time, according to the set priorities of the services or service time-slots, switches an interrupted service with a higher priority to said protection time-slot to be borne.

12. The device as claimed in claim 11, wherein:
when said control unit configures a plurality of protection time-slots for a service or service time-slot, said control unit is further configured to set priorities of the protection time-slots, and when the service or a service borne on the service time-slot is interrupted, switch the service to a protection time-slot with a higher priority to be borne preferentially.
